# EUROPEAN PATENT SPECIFICATION

(11) **EP 0 423 861 B1**
(45) Date of publication and mention of the grant of the patent: **30.08.1995**
(21) Application number: 90202579.0
(22) Date of filing: 28.09.1990
(51) Int. Cl.: C08F 210/16, C08F 4/654

(54) **Process for the preparation of ethylene-butene-1 copolymers having an ultralow density**
Verfahren zur Herstellung von Ethylen-buten-1-Copolymeren mit ultraniedriger Dichte
Procédé de préparation de copolymères éthylène-butène-1 à densité ultrabasse

(30) Priority: 06.10.1989 IT 2193489
(43) Date of publication of application: 24.04.1991
(73) Proprietor: ENICHEM S.p.A., 20124 Milano (IT)
(72) Inventor: Mirra, Mauro, I-13051 Biella Vercelli (IT); Masi, Francesco Via Kennedy 36, Milan (IT); Invernizzi, Renzo, I-20147 Milan (IT); Langianni, Elio, I-44100 Ferrara (IT); Masini, Sergio, I-97100 Ragusa (IT)
(74) Representative: Fusina, Gerolamo

(56) References cited:
- EP-A- 0 144 716
- EP-A- 0 243 327

## Description

The present invention relates to a process for the production of ethylene-butene-1 copolymers having an ultralow density, for use in various application sectors.

Ziegler catalysts are widely known in technology and used on an industrial scale for the polymerization of ethylene and α-olefins in processes carried out at a low temperature and at a low pressure. The use of these catalysts is also known in technology for the polymerization or copolymerization of ethylene in processes carried out at a high temperature (in general above 120°C) and at high pressures (in general above about 500 bar), in reactors of the vessel or tubular type, under conditions similar to those used for the preparation of low-density polyethylene by means of radical initiators. For details of this technique reference should be made to the descriptions in British patent 828,828, US Patent 3,732,403 and French patent application 8320009. A special catalyst active in the copolymerization of ethylene with an α-olefin, containing four or more carbon atoms, in a tubular reactor operating at a high pressure and at a high temperature, has been described in European patent application No. 243,327 in the name of the Applicant. According to this patent application, in particular, ethylene and butene-1 copolymers are obtained, having a butene-1 content from about 4 to about 8 wt% and density values from 0.915 to 0.940.

It has now been found that the catalyst described in the European patent application referred to above exhibits activity in the copolymerization of ethylene and butene-1 streams with an unusually high butene-1 content and capable of producing ethylene-butene-1 copolymers with ultralow density values, which are used in various industrial applications.

The present invention accordingly relates to a process for the preparation of propylene free ethylene-1-butene copolymers having a density from 0.880 to 0.910 g/ml, an impact resistance of from 35 to 85 kJ/m (as measured by the dart drop test, ASTM B-1709) and a content of 1-butene of 10 to 30 % by weight, by copolymerization of ethylene and 1-butene at a pressure of from 800 to 2000 bar, in a reactor vessel at a temperature of from 140°C to 280°C, or in a tubular reactor at a temperature of from 90°C to 280 °C, in the presence of a Ziegler catalyst consisting of:
(a) an aluminium trialkyl cocatalyst, and
(b) a solid titanium catalyst component supported on magnesium chloride, the said component being formed of scherical particles at least 70% of which have a diameter from 0.5 to 10 »m, an apparent density from 0.3 to 0.5 g/ml, a porosity from 0.6 to 1.2 ml/g, a surface area from 20 to 120 m²/g, a hydroxy alcohol content below 2 wt% expressed as weight of ethanol, and a titanium content from 0.4 to 4.0 wt%, expressed as metallic titanium, the said titanium being present partially in the trivalent and partially in the tetravalent state, with a ratio between the said titanium in the trivalent state and the total titanium from 0.2/1 to 0.5/1;
the atomic ratio between the aluminum in the cocatalyst (a) and the titanium in the solid component (b) ranging from 15/1 to 45/1;
characterized in that:
the reactor vessel is supplied with a gas mixture containing ethylene and 1-butene in a weight ratio from 15/85 to 35/65, and possibly hydrogen in a quantity from 0 to 2000 parts by volume per million parts by volume of the gas mixture, or
the tubular reactor is supplied with a gas mixture containing ethylene and 1-butene in a weight ratio from 15/85 to 25/75, and possibly hydrogen in a quantity from 200 to 2000 parts by volume per million parts by volume of the gas mixture.

In the preferred embodiment, the catalyst component (b) contains from 2 to 3 wt% titanium and less than 1 wt% hydroxy alcohol, again expressed as weight of ethanol, and in the form of particles at least 90 wt% of which have a particle size within the range from 0.5 to 10 »m.

The solid component of the catalyst may be prepared by means of a process, already known, which provides for the preparation of a magnesium chloride spherical granular support containing ethanol hydroxy, the activation of the support by interaction with titanium tetrachloride to produce the activated support and the treatment of the activated support with aluminium alkyl chloride to produce the solid component of the catalyst.

More particularly, the support is prepared by the spray drying of an ethanolic magnesium chloride solution in a spray-drying apparatus. A typical technique is for a solution containing 40 parts by weight magnesium chloride per 100 parts by weight ethanol, maintained at about 130°C under a nitrogen pressure of about 5 bar, to be delivered to a spray-drying apparatus in a gaseous nitrogen countercurrent flow, the latter having an inlet temperature of the order of 350°C and an outlet temperature of the order of 230°C. Under these conditions a magnesium chloride support containing ethanol hydroxy, is obtained, having the following general characteristics: spherical particles, at least 70 wt% of which have a diameter from 0.5 to 10 »m, an apparent density from 0.6 to 0.8 ml/g, a surface area from 2 to 20 m²/g and a hydroxy alcohol content from 3 to 15 wt%, expressed as the weight of ethanol.

A support of this type is activated by interaction with titanium tetrachloride and typically 70-80 parts by weight of the support are suspended in 100 parts by weight titanium tetrachloride and the suspension heated to 80-100 °C for a period of 15 to 60 minutes. After separation and washing with liquid paraffin of the solid which has been treated in this way, an activated support is obtained having a shape, dimensions and apparent density similar to those of the support and the following other characteristics: a porosity from 0.7 to 1 ml/g, a surface area from 10 to 100 m²/g, a hydroxy alcohol content from 0.2 to 4 wt%, expressed as weight of ethanol, and a titanium content from 0.8 to 4 wt%, expressed as metallic titanium.

The support, activated in this way, is then brought into contact with an aluminium alkyl chloride, selected from aluminium dialkyl chloride, aluminium alkyl dichloride and aluminium alkil sesquichloride, having an atomic ratio between the aluminium (in the said aluminium alkyl chloride) and the titanium (in the said activated support) from 2/1 to 20/1, at a temperature from 0 to 100°C and for a period from 100 hours to 15 minutes. This treatment, which is preferably carried out in a liquid paraffin vehicle, enables the formation of the solid catalyst component having the characteristics specified above.

The cocatalyst, used in combination with the solid component described above is an aluminium trialkyl containing from 2 to 4 carbon atoms in the alkyl portion. The preferred cocatalyst is aluminium triethyl.

For preparation of the ethylene-butene-1 copolymers, a gas stream containing ethylene and butene-1 in a weight ratio from 15/85 to 35/65, and possibly hydrogen in a quantity from 0 to 2000 parts by volume per million parts by volume of the stream itself, is introduced, together with a stream of solid catalyst component and a cocatalyst stream, into a reactor vessel or tubular reactor, maintained at high temperature and pressure values and for relatively low residence times under polymerization conditions. In particular, the general operating conditions are as follows:
- reactor temperature: from 90 to 280°C (tubular reactor) from 140 to 280°C (reactor vessel) (with a gas inlet temperature of the order of 60°C)
- pressure: from 800 to 2000 bar
- residence time: from 15 to 60 s
- quantity of solid catalyst component: from 10 to 200 mg per kg monomers (ethylene and butene-1)
- quantity of cocatalyst: from 0.2 to 2.0 mmoles per kg monomers (ethylene and butene-1)
- atomic ratio between the aluminium (in the cocatalyst) and the titanium (in the solid catalyst component): from 15/1 to 70/1 and preferably from 15/1 to 45/1.

The solid catalyst component is conveniently fed in in the form of a suspension in an inert hydrocarbon vehicle and the cocatalyst in the form of a solution in a liquid hydrocarbon solvent.

The polymerization product is subjected at the reactor outlet to a multistage flash at progressively decreasing pressures to recover the copolymer and separate the unchanged monomers, which are recycled after purification and reintegration with fresh gases. The ethylene-butene-1 copolymer recovered in this way has typically characteristics within the following value ranges:

| | | |
|---|---|---|
| - butene-1 content: (IR determination) (ASTM D-2238-69) | | from 10 to 30 wt% |
| - density: (ASTM D-2839) | | from 0.880 to 0.910 g/ml |
| - melting point: (DSC DuPont, IIa melting process) | | from 105 to 116°C |
| - melting index: to (ASTM D-1238, cond. E, proc. A) | | from 1 to 30 g/10' |
| - shear sensitivity: (ASTM D-1238) | | from 24 to 40 |
| - haze: (ASTM D-1003) | | from 1 to 5% |
| - dart drop test (impact): (ASTM B-1709) | | from 35 to 85 kJ/m |
| - elongation at rupture (ASTM D-882B) | longitudinal: | from 450 to 800% |
| | transverse: | from 750 to 10000% |
| - Vicat test: (ASTM D-1525) | | from 60 to 78°C |
| - colour: | | from A to B |
| - odour on the polymer and film surface: | | none |

The colour values are determined by the modified ASTM D-1725 method, comparing the ethylene-butene-1 copolymer under examination with polyethylenes having a known colour and obtained by the standard method indicated above. The reference polyethylenes are assigned conventional colour values on a scale from A to D, where A represents the better colour.

It is therefore possible according to the invention to obtain ethylene-butene-1 copolymers with ultralow density values, which are particularly useful for the preparation of film and stamped products and for mixing with other polymers.

The experimental examples below have been given as a clearer illustration of the invention.

### Example 1

40 kg magnesium chloride with a water content of less than 0.7 wt% is dissolved in 100 kg anhydrous ethanol (with a water content below 0.2 wt%) at 130°C and under a nitrogen pressure of 5 bar. This solution is introduced, at the same temperature and at the same pressure, into a spray-drying apparatus of the "closed cycle drying" type from the firm NIRO, operating on an equiflow regime and with total recovery of the evaporated organic solvent. In this apparatus the solution is reduced to droplet form, operating at an inlet temperature of the nitrogen gas flow of 350°C and an outlet temperature of the nitrogen gas flow of 225-235°C. Under these conditions a solid granular material having the following characteristics is formed at the bottom of the spray-drier:
- particle shape and dimensions: spherical with about 90% particles having a diameter from 0.5 to 10 »m;
- hydroxy alcohol content: 10 wt%, expressed as weight of ethanol;
- apparent density: 0.4 g/ml;
- porosity: 0.7 ml/g; and
- surface area: 3 m²/g.

45 kg of the support obtained as described above are suspended in 60 kg titanium tetrachloride. The mixture is heated for 30 min at 100°C. At the end of this period it is cooled, the unchanged titanium tetrachloride is filtered off and the solid washed with n-decane until no further chlorine is present in the washing liquid. This yields an activated support having the following characteristics:
- shape and dimensions of the particles: similar to those of the support;
- hydroxy alcohol content: 2.5 wt%, expressed as weight of ethanol;
- titanium content: 2.3 wt%, expressed as metallic titanium;
- apparent density: similar to that of the support;
- porosity: similar to that of the support; and
- specific surface area: 18 m²/g.

45 kg of the activated support, obtained as described above, are suspended in 100 l isoparaffin C10-C12 (the commercial product ISOPAR G from the firm EXXON). The material is heated at 70°C and 18 kg aluminium diethyl chloride added gradually over the course of 1 hour, under constant stirring. On conclusion of the addition process, the material is maintained under constant stirring for a further hour at 70°C. This yields the solid catalyst component in the form of particles suspended in the liquid vehicle. The solid component in particle form has the following characteristics:
- shape and particle size: similar to those of the support;
- hydroxy alcohol content: 0.8 wt%, expressed as weight of ethanol;
- titanium content: 2.3 wt%, expressed as metallic titanium;
- ratio between titanium in the trivalent state and the total titanium in the trivalent and tetravalent states: 0.31/1;
- apparent density: similar to that of the support;
- porosity: 0.8 g/ml; and
- surface area: 26 m²/g

### Examle 2

Use is made for the polymerization test of a reactor vessel having a capacity of 0.5 l, fitted with a turbine stirrer, wave-breakers and a thermostatic control system. The following elements are fed in continuously at the top of the reactor vessel:
- an ethylene and butene-1 stream (in a weight ratio of 3:7) at an overall flow rate of 30 kg/h,
- an aluminium triethyl solution in hexane (concentration: 6-7 mM/l), containing about 0.3 mM aluminium triethyl per kg total gas (ethylene and butene-1), and
- a vaseline suspension (supplied by Carlo Erba) of the solid catalyst component prepared in Example 1, in an amount (dry weight) of 18.5 mg per kg total gas (ethylene and butene-1).

The operations are carried out at a reagent inlet temperature of 60°C, a polymerization temperature of 190°C, a stirring speed of 1700 revolutions/s and a residence time of about 30 s.

The polymerization product is continuously discharged at the bottom of the reactor and subjected to a first flash in a high pressure separator (300 bar), followed by a second flash in a low pressure separator (1-1.5 bar). Diethylene glycol is injected at the site of discharge from the reactor, to deactivate the catalyst. Unreacted monomers, after separation of the flash treatment, are recycled after purification and reintegration with fresh monomers. The polymer is recovered by means of an extruder connected to the low pressure separator.

The process is operated continuously for 48 h with the following results:
- monomer conversion: 10.6 wt%;
- mean hourly output of ethylene-butene-1 copolymer: 3.2 kg;
- butene-1 (C4) content in the copolymer: 17 wt%;
- melting index (MFI) of the copolymer: 1.2 g/10′;
- shear sensitivity (SS) of the copolymer: 28;
- density of the copolymer: 0.910 g/ml;
- copolymer yield in g per g titanium (g/gTi): 251,000.

The polymerization conditions are set out in Table 1 and the polymerization results in Table II.

### Examples 3-11

The procedure is similar to that described in Example 2, with variation of one or more of the reaction parameters, as shown in Table I. The polymerization results are shown in Table II.

**Table I**

| Example No. | Inlet temperature °C | Polymeriz. temperature °C | Gas delivery (C2+C4; kg) | Weight ratio (C2/C4) |
|---|---|---|---|---|
| 2 | 60 | 190 | 30 | 30/70 |
| 3 | 60 | 244 | 30 | 33/67 |
| 4 | 60 | 193 | 30 | 24/76 |
| 5 | 60 | 200 | 30 | 26/74 |
| 6 | 60 | 196 | 30 | 20/80 |
| 7 | 60 | 220 | 30 | 27/77 |
| 8 | 60 | 240 | 30 | 30/70 |
| 9 | 60 | 244 | 30 | 32/68 |
| 10 | 60 | 193 | 30 | 22/78 |
| 11 | 60 | 220 | 30 | 27/73 |

**Table II**

| Example No. | Conversion (%) | Output (kg) | C4 bound (wt %) | MFI (g/10′) | SS | Density (g/ml) | Yield (g/gTi) |
|---|---|---|---|---|---|---|---|
| 2 | 10.6 | 3.2 | 17 | 1.2 | 28 | 0.910 | 251,000 |
| 3 | 17.1 | 5.1 | 20 | 11.2 | - | 0.897 | 71,000 |
| 4 | 10.6 | 3.2 | 19 | 1.1 | 26 | 0.906 | 201,000 |
| 5 | 11.3 | 3.4 | 21 | 1.2 | 32 | 0.902 | 197,000 |
| 6 | 9.7 | 2.9 | 23 | 1.4 | 32 | 0.901 | 234,000 |
| 7 | 13.5 | 4.0 | 18 | 6.0 | - | 0.906 | 95,000 |
| 8 | 15.5 | 4.7 | 20 | 17.8 | - | 0.903 | 34,000 |
| 9 | 15.5 | 4.7 | 17 | 16.6 | - | 0.910 | 51,000 |
| 10 | 10.3 | 1.4 | 21 | 1.4 | 28 | 0.902 | 163,000 |
| 11 | 13.9 | 4.2 | 20 | 6.1 | - | 0.902 | 115,000 |

### Example 12

Use is made of a steel tubular reactor of an industrial type having an internal diameter of 1 inch (25.4 mm) and a length of 600 m. 12-12.5 t/h of a mixture of ethylene, butene-1 and hydrogen, together with 25l/h suspension of the solid catalyst component in ISOPAR G (containing 20g/l solid catalyst component) prepared as described in Example 1, are fed in at one end of the reactor. 8-12 l/h 13 wt% aluminium triethyl solution in heptane are fed in a few metres upstream from the site of introduction of the suspension. This ensures that the atomic ratio between the aluminium, in the said aluminium triethyl, and the titanium in the solid catalyst component is about 30-40/l.

Polymerization is carried out under the following conditions:

| | |
|---|---|
| - reactor inlet pressure: | 1,300 bar |
| - reactor inlet temperature: | 60°C |
| - polymerization priming temperature: | 95-98°C |
| - peak temperature: | 250-255°C |
| - residence time: | 42-44 s |
| - C2/C4 weight ratio in the feed: | 26/73-25/75 |
| - hydrogen supply (in relation to total gas): | 200 vpm |

A polyhydroxylated compound is introduced at the reactor outlet in order to deactivate the catalyst and the polymer is recovered via a multistage flash with direct feed to the extruder. The recovered gases are recycled to the reactor inlet after purification and reintegration with fresh gases.

Under the operating conditions specified above, the conversion rate, based on ethylene, is 68% and the output 2.5 t/h ethylene-butene-1 copolymer (mean catalytic yield: 200,000-220,000 g copolymer per g titanium), with a butene-1 content of 10 wt%, having the following characteristics:

| | | |
|---|---|---|
| - density: | | 0.910 g/ml |
| - melting index: | | 1.03 g/10' |
| - shear sensitivity: | | 39.5 |
| - dart drop test (impact): | | 84 kJ/m |
| - haze: | | 3% |
| - elongation at rupture (thickness 25 »m) | longitudinal: | 470% |
| | transverse: | 826% |
| - colour: | | A/B |
| - Vicat test: | | 76.7°C |
| - odour: | | none |
| - odour during the film formation phase: | | none |

### Example 13

The procedure is similar to that described in Example 12 except that the hydrogen content in the feed gas to the reactor is 750 vpm (volumes per million volumes).

Under these conditions the conversion rate, based on ethylene is 68% and the output 2.5 t/h ethylene-butene-1 copolymer (mean catalytic yield: 200,000-220,000 g copolymer per g titanium) with a butene-1 content of 11.5 wt%, having the following characteristics:

| | | |
|---|---|---|
| - density: | | 0.910 g/ml |
| = melting index: | | 4.11 g/10' |
| - shear sensitivity: | | 34.5 |
| - dart drop test (impact): | | 38 kJ/m |
| - haze: | | 2% |
| - elongation at rupture (thickness 25 »m) | longitudinal: | 543% |
| | transverse: | 760% |
| - colour: | | A/B |
| - Vicat test: | | 71°C |
| - odour: | | none |
| - odour during the film formation phase: | | none |

### Example 14

The procedure is similar to that described in Example 12, with the following differences: the polymerization priming temperature is 78-85°C, the weight ratio between ethylene and butene-1 at the reactor inlet is 22/78-20/80 and the hydrogen content in the feed gas is about 1000 vpm.

Under these conditions the conversion rate, based on ethylene, is 80-82% and the output 2.6 t/h ethylene-butene-1 copolymer (mean catalytic yield 170,000-180,000 g copolymer per g titanium) with a butene-1 content of 15.5 wt%, having the following characteristics:

| | |
|---|---|
| - density: | 0.900 g/ml |
| - melting index: | 5.5 g/10' |
| - melting temperature: | 115.6°C |
| - colour: | A/B |
| - Vicat test: | 65°C |
| - odour: | none |

### Example 15

The procedure is similar to that described in Example 12, with the following differences: the weight ratio between ethylene and butene-1 at the reactor inlet is maintained at 20/80-18/82 and the hydrogen content in the feed gas is about 1250 vpm.

Under these operating conditions the conversion rate, based on ethylene, is 80-82% and the output 2.65 t/h ethylene-butene-1 copolymer (mean catalytic yield 140,000-160,000 g copolymer per g titanium) with a butene-1 content of 21 wt%, having the following characteristics:

| | |
|---|---|
| - density: | 0.890 g/ml |
| - melting index: | 7.0 g/ml |
| - melting temperature: | 111.9°C |
| - colour: | A/B |
| - Vicat test: | 60°C |
| - odour: | none |

## Claims

1. Process for the preparation of propylene free ethylene-1-butene copolymers having a density from 0.880 to 0.910 g/ml, an impact resistance of from 35 to 85 kJ/m (as measured by the dart drop test, ASTM B-1709) and a content of 1-butene of 10 to 30 % by weight, by copolymerization of ethylene and 1-butene at a pressure of from 800 to 2000 bar, in a reactor vessel at a temperature of from 140°C to 280°C, or in a tubular reactor at a temperature of from 90°C to 280 °C, in the presence of a Ziegler catalyst consisting of:
(a) an aluminium trialkyl cocatalyst, and
(b) a solid titanium catalyst component supported on magnesium chloride, the said component being formed of spherical particles at least 70% of which have a diameter from 0.5 to 10 »m, an apparent density from 0.3 to 0.5 g/ml, a porosity from 0.6 to 1.2 ml/g, a surface area from 20 to 120 m²/g, a hydroxy alcohol content below 2 wt% expressed as weight of ethanol, and a titanium content from 0.4 to 4.0 wt%, expressed as metallic titanium, the said titanium being present partially in the trivalent and partially in the tetravalent state, with a ratio between the said titanium in the trivalent state and the total titanium from 0.2/l to 0.5/l;
the atomic ratio between the aluminum in the cocatalyst (a) and the titanium in the solid component (b) ranging from 15/1 to 45/1;
characterized in the
the reactor vessel is supplied with a gas mixture containing ethylene and 1-butene in a weight ratio from 15/85 to 35/65, and possibly hydrogen in a quantity from 0 to 2000 parts by volume per million parts by volume of the gas mixture, or
the tubular reactor is supplied with a gas mixture containing ethylene and 1-butene in a weight ratio from 15/85 to 25/75, and possibly hydrogen in a quantity from 200 to 2000 parts by volume per million parts by volume of the gas mixture.

2. Process according to Claim 1, characterized in that the cocatalyst is an aluminium trialkyl containing 2 to 4 carbon atoms in the alkyl portion and is preferably aluminium triethyl.

3. Process according to Claim 1, characterized in that the solid catalyst component contains 2 to 3 wt% titanium and less than 1 wt% hydroxy alcohols and is present in the form of particles, at least 90 wt% of which have a particle size within the range from 0.5 to 10 »m.

4. Process according to Claim 1, characterized in that it is carried out with a residence time from 15 to 60 s, using a quantity of solid catalyst component from 10 to 200 mg per kg monomers (ethylene and butene-1), a quantity of cocatalyst from 0.2 to 2.0 mmoles per kg of the said monomers.

## Patentansprüche

1. Verfahren zur Herstellung propylenfreier Äthylen-1-butencopolymerer mit einer Dichte von 0,880 bis 0,910 g/ml, einer Schlagfestigkeit von 35 bis 85 kJ/m (gemessen nach dem Pfeilfalltest ASTM B-1709) und einem Gehalt an 1-Buten von 10 bis 30 Gew.-%, durch Copolymerisieren von Äthylen und 1-Buten bei einem Druck von 800 bis 2000 bar, in einem Reaktorgefäß bei einer Temperatur von 140°C bis 280°C oder in einem Rohrreaktor bei einer Temperatur von 90°C bis 280°C, in Gegenwart eines Zieglerkatalysators, bestehend aus
a) einem Al-trialkyl-Cokatalysator und
b) einer festen Ti-Katalysatorkomponente, die auf Magnesiumchlorid getragen wird, wobei diese Komponente aus kugelförmigen Teilchen gebildet ist, von denen mindestens 70 % einen Durchmesser von 0,5 bis 10 »m, eine scheinbare Dichte von 0,3 bis 0,5 g/ml, eine Porosität von 0,6 bis 1,2 ml/g, eine Oberfläche von 20 bis 120 m²/g, einen Hydroxyalkoholgehalt von unter 2 Gew.-% ausgedrückt als Äthanol, und einen Ti-Gehalt von 0,4 bis 4,0 Gew.-% ausgedrückt als metallisches Ti aufweisen, wobei das Ti teilweise im dreiwertigen und teilweise im vierwertigen Zustand vorliegt, das Verhältnis von Ti im dreiwertigen Zustand zum Gesamt-Ti von 0,2/1 bis 0,5/1 beträgt,
das Atomverhältnis von Al im Cokatalysator (a) zu Ti in der festen Komponente (b) von 15/1 bis 45/1 beträgt, dadurch gekennzeichnet, daß das Reaktorgefäß mit einer Gasmischung beschickt wird, die Äthylen und 1-Buten in einem Gew.-Verhältnis von 15/85 bis 35/65 enthält, sowie gegebenenfalls mit Wasserstoff in einer Menge von 0 bis 2000 Vol.-Teilen pro Million Vol.-Teilen der Gasmischung, oder daß der Rohrreaktor mit einer Gasmischung beschickt wird, die Äthylen und 1-Buten in einem Gew.-Verhältnis von 15/85 bis 25/75 enthält, und gegebenenfalls mit Wasserstoff in einer Menge von 200 bis 2000 Vol.-Teilen pro Million Vol.-Teilen der Gasmischung.

2. Verfahren nach Anspruch 1, dadurch gekennzeichnet, daß der Cokatalysator ein Al-trialkyl mit 2 bis 4 C-Atomen in seinem Alkylanteil, vorzugsweise Al-triäthyl ist.

3. Verfahren nach Anspruch 1, dadurch gekennzeichnet, daß die feste Katalysatorkomponente 2 bis 3 Gew.-% Ti und weniger als 1 Gew.-% Hydroxyalkohole enthält und in Form von Teilchen vorliegt, von denen mindestens 90 Gew.-% eine Teilchengröße im Bereich von 0,5 bis 10 »m aufweisen.

4. Verfahren nach Anspruch 1, dadurch gekennzeichnet, daß es mit einer Verweilzeit von 15 bis 60 sec unter Verwendung einer Menge an fester Katalysatorkomponente von 10 bis 200 mg pro kg Monomere (Äthylen und Buten-1) und einer Menge an Cokatalysator von 0,2 bis 2,0 mMol pro kg Monomere durchgeführt wird.

## Revendications

1. Procédé pour la préparation de copolymères poly(éthylène/1-butène) exempts de propylène ayant une masse volumique de 0,880 à 0,910 g/ml, une résistance aux chocs allant de 35 à 85 kJ/m (mesuré par les essais de chute de pointe, ASTM D-1709) et une teneur en 1-butène allant de 10 à 30% en poids, par copolymérisation d'éthylène et de 1-butène à une pression de 800 à 2000 bars, dans une cuve de réacteur à une température allant de 140 à 280°C, ou dans un réacteur tubulaire à une température allant de 90 à 280°C, en présence d'un catalyseur Ziegler consistant en:
(a) un cocatalyseur de type trialkyl-aluminium et
(b) un composant catalytique solide de titane fixé sur chlorure de magnésium, ledit composé étant formé de particules sphériques dont au moins 70% ont un diamètre allant de 0,5 à 10 »m, une masse volumique apparente allant de 0,3 à 0,5 g/ml, une porosité allant de 0,6 à 1,2 ml/g, une surface spécifique allant de 20 à 120 m²/g, une teneur en alcool hydroxylique inférieure à 2% en poids, exprimée en poids d'éthanol, et une teneur en titane, sous forme de titane métallique, allant de 0,4 à 4,0 % en poids, ledit titane étant présent en partie à l'état trivalent et en partie à l'état tétravalent, avec un rapport entre ledit titane à l'état trivalent et le titane total allant de 0,2/1 à 0,5/1;
le rapport atomique d'aluminium entre le cocatalyseur (a) et le titane dans le composé solide (b) étant compris entre 15/1 et 45/1;
caractérisé en ce que:
la cuve de réacteur est alimentée avec un mélange de gaz contenant l'éthylène et le 1-butène dans un rapport pondéral compris entre 15/85 et 35/65, et éventuellement de l'hydrogène en une quantité allant de 0 à 2000 parties en volume par million de parties en volume du mélange de gaz, ou en ce que le réacteur tubulaire est alimenté par un mélange de gaz contenant l'éthylène et le 1-butène dans un rapport pondéral allant de 15/85 à 25/75, et éventuellement de l'hydrogène en une quantité allant de 200 à 2000 parties en volume par million de parties en volume du mélange de gaz.

2. Procédé conforme à la revendication 1, caractérisé en ce que le coctalyseur est un trialkyl-aluminium contenant de 2 à 4 atomes de carbone dans la partie alkyle et est de préférence un triéthyl-aluminium.

3. Procédé conforme à la revendication 1, caractérisé en ce que le composant catalytique solide contient de 2 à 3% en poids de titane et moins de 1% en poids d'alcools hydroxyliques et est présent sous forme de particules, dont au moins 90% ont une taille comprise entre 0,5 à 10 »m.

4. Procédé conforme à la revendication 1, caractérisé en ce qu'il est effectué avec un temps de séjour allant de 15 à 60 s, utilisant une quantité de de composant catalytique solide allant de 10 à 200 mg par kg de monomères (éthylène et 1-butène) et une quantité de cocatalyseur allant de 0,2 à 2,0 mmoles par kg desdits monomères.
